# EUROPÄISCHE PATENTANMELDUNG

(11) **EP 4 439 975 A1**
(43) Veröffentlichungstag der Anmeldung: **02.10.2024**
(21) Anmeldenummer: 24166550.4
(22) Anmeldetag: 26.03.2024
(51) Int. Cl.: H02S 20/24, F24S 20/67, F24S 25/61, F24S 25/615, F24S 25/00, F24S 25/60

(54) **BEFESTIGUNGSEINREICHTUNG FÜR AUFBAUTEN, INSBESONDERE SOLARPANELS UND/ODER ELEMENTE VON SOLARANLAGEN ODER SONSTIGE AUFBAUTEN UND/ODER ABSTURZSICHERUNGEN AUF DÄCHERN, INSBESONDERE FLACHDÄCHERN**

(30) Priorität: 27.03.2023 DE 102023107639; 27.03.2023 DE 202023101519 U
(71) Anmelder: 4G Grundstücksverwaltungs GmbH & Co. KG, 89079 Ulm (DE)
(72) Erfinder: Engelhardt, Joachim, 89233 Neu-Ulm-Pfuhl (DE); Engelhardt, Maximilian André, 89079 Ulm (DE); Engelhardt, Tim, 89231 Neu-Ulm (DE)
(74) Vertreter: Sawodny, Michael-Wolfgang

(57) **Zusammenfassung**

Befestigungseinrichtung für Aufbauten, insbesondere Solarpanels und/oder Elemente von Solaranlagen und/oder Absturzsicherungen, sonstige Aufbauten, wie Wärmepumpen, Klimageräten etc. auf Dächern, insbesondere Flachdächern, wobei die Befestigungseinrichtung bevorzugt eine feste Verbindung der Aufbauten mit dem Dach zur Verfügung stellt mit
- wenigstens einer Gewindestange (3) und
- wenigstens einem an der Gewindestange angeordneten Dübel (5), insbesondere einem Kippdübel bevorzugt mit Einstellmutter oder sonstiger Einstellvorrichtung für die erforderliche Länge.

Die Erfindung ist dadurch gekennzeichnet, dass die Befestigungseinrichtung eine Stützhülse (1) umfasst, die die Gewindestange umschließt.

## Beschreibung

Die Erfindung betrifft eine Befestigungseinrichtung für Aufbauten, insbesondere auch sonstige Aufbauten, wie Solarpanels und/oder Elemente von Solaranlagen und/oder Absturzsicherungen und/oder Wärmepumpen und/oder Klima- und Lüftungsgeräte auf Dächern, insbesondere Flachdächern, wobei die Befestigungseinrichtung bevorzugt eine feste Verbindung der Aufbauten mit dem Dach zur Verfügung stellt.

Befestigungseinrichtungen für Aufbauten, insbesondere Solarpanels und/oder Elemente von Solaranlagen und/oder Absturzsicherungen können für eine Vielzahl von Verwendungen eingesetzt werden. An den Befestigungselementen können bspw. Elemente von Solaranlagen sowie Absturzsicherungen für Dächer, insbesondere Flachdächer, die allgemein als Sekuranten bezeichnet werden, angeordnet werden.

Bislang erfolgte eine feste Montage von Aufbauten, insbesondere Solarpanels und/oder Elementen von Solaranlagen und/oder Absturzsicherungen auf Dächern, insbesondere Flachdächern, nicht durch eine feste Verbindung zum Tragwerk, sondern beispielsweise dadurch, dass die Solarpanels lediglich auf das Dach aufgelegt und mit Hilfe beispielsweise von Steinen beschwert wurden, um damit ein Ab- und Verrutschen der einzelnen Panels der Solaranlage auf dem Dach zu verhindern. Ein Nachteil der so auf ein Dach, insbesondere einem Flachdach aufgebrachten Solarpanels ist, dass durch die Beschwerung die Dachlast sehr erhöht wird und das Flachdach zum Tragen dieser Last sehr stark verstärkt werden musste. Wollte man diese Last senken und zwischen Solarpanels und dem Dach, insbesondere dem Flachdach, eine feste Verbindung zum Tragwerk erreichen, so ergab sich der Nachteil dass, um eine feste Verbindung zum Tragwerk zu erreichen, die Abdichtung des Flachdaches insbesondere bei der Montage desselben beschädigt wurde. Zudem ergab sich bei der Montage ein erheblicher Arbeitsaufwand. Ein weiteres Problem war, das durch das Durchbohren der Abdichtung eine hohe Anzahl an Dachdurchdringung erfolgte und danach keine Abdichtung insbesondere nach den einschlägigen Vorschriften mehr vorlag. Hier sei insbesondere die Regelung gem. DIN 18531 für Flachdächer und die Flachdachrichtlinie des Zentralverbandes des deutschen Dachdeckerhandwerks von 2019 genannt. Insbesondere war keine Dauerhaftigkeit aller derzeit verwandten Abdichtungen gegeben. Des Weiteren wurden durch diese festen Verbindungen bei der eingesetzten Verklebung bei Abdichtungen dieser Durchdringungen die Garantiebedingungen der Hersteller von Dachbahnen und Abdichtungssystemen verletzt.

Aus der DE 10 2007 053 556 A1 ist eine Dachbefestigungsvorrichtung bekannt geworden mit einem Durchdringungselement in Form einer Gewindestange, die durch die Dichthaut und Dachisolierung eines Flachdaches beispielsweise in einer Bohrung hindurchgeführt wird. Bei der Durchdringung des Daches handelt es sich um eine punktuelle Durchdringung. Um die Dachbefestigungsvorrichtung am Dach sicher zu befestigen ist vorgesehen, dass für eine ausschließlich von oben zu montierende Dachbefestigungsvorrichtung ein Kippdübel durch die Bohrung hindurchgeführt wird, der in seiner Montageposition kippt und gegen das Dach verspannt wird. In der DE 10 2007 053 556 A1 ist keine Stützhülse beschrieben, die die Gewindestange umschließt, so dass keine Verbesserung der Stabilität erreicht werden kann. Des Weiteren ist in der DE 10 2007 053 556 A1 beschrieben, dass eine Druckvorrichtung mit einem Abdeckelement, das einstückig ausgeführt ist, verpresst wird. Genau diese Ausgestaltung ist nachteilig. Die Druckvorrichtung ist eine handelsübliche Schraube. Diese Schraubverbindung liegt in der wasserführenden Ebene eines Flachdaches. Des Weiteren gezeigt ist eine Dichtscheibe, welche ebenfalls in der wasserführenden Ebene eines Flachdaches zu liegen kommt. Des Weiteren stellt das Gewinde eine "punktuelle Undichtigkeit" dar. Insbesondere kann Regenwasser und Schmelzwasser über das Gewinde eindringen und Kleber und Abdeckelement bis zur Isolierung unterwandern bzw. bis zum Kippdübel durchdringen.

Die in der DE 10 2007 053 556 A1 gezeigte Konstruktion entspricht daher in keiner Weise der DIN 18531 für Flachdächer und der Flachdachrichtlinie des Zentralverbandes des deutschen Dachdeckerhandwerks von 2019.

Des Weitern wird in der DE 10 2007 053 556 A1 die Abdeckplatte nur über eine handelsübliche Mutter, über die weiche, nachgiebige Isolierung, verpresst. Es gibt somit keine kraft- und formschlüssige Verbindung des Abdeckelements, dem Kippdübel, der Abdichtungsfolie und der Klebstoffverbindung. Wenn ein Monteur durch Unachtsamkeit, auf den Rand der Abdichtungsfolie tritt, dann gibt die Isolierung nach, und die Klebstoffverbindung und Dichthaut kann aufbrechen. Damit kann Wasser eindringen.

Da bei Befestigungen immer Kräfte auftreten, die insbesondere durch Windlasten auch dynamische Kräfte sind, kann diese oben beschriebene Undichtigkeit sich auch im Laufe der Zeit einstellen.

Die DE 20 2012 103 903 U1 beschreibt eine Vorrichtung zur Montage von Dachaufbauten auf einer Dachunterkonstruktion mit einem bolzenförmigen Befestigungselement, dessen oberes Ende zur Abstützung der Dachaufbauten dient. Bei der DE 20 2012 103 903 U1 wird die Befestigung unmittelbar in einem tragenden Teil der Dachunterkonstruktion vorgenommen. Eine Stützhülse ist nicht vorgesehen, so dass wie zuvor beschrieben, die Stabilität dieser Konstruktion mangelhaft ist.

In der DE 20 2012 103 903 U1 ist ein Stehbolzen, welcher an einem Ende als Selbstbohrschraube ausgebildet ist und am anderen Ende ein herkömmliches Maschinenschrauben-Gewinde aufweist, gezeigt. Der Stehbolzen wird gemäß der DE 20 2012 103 903 U1 direkt über die Dacheindeckung in die Dachkonstruktion eingetrieben. Das bolzenförmige Befestigungselement wird über eine Abstützplatte mit dem Stehbolzen verschraubt. Über die Art der Abdichtung des Stehbolzen zur Dachhaut (Ziegel, Schiefer, Pappschindel, Wellfaserplatte oder ähnliche Dacheindeckung) oder die Abstützplatte werden keine weiteren Angaben gemacht. Auch über das Verhältnis des Stehbolzen zur Abstützplatte gibt es keine Beschreibung. Gemäß der DE 20 2012 103 903 U1 ist die Vorrichtung sowohl für geneigte Dächer, mit Ziegeleindeckung als auch Flachdächer, mit Beton, Bitumen und Folien geeignet.

Aus der DE 20 2012 103 903 U1 lässt sich kein Hinweis entnehmen, wie eine Dachdurchdringung, welche über den Stehbolzen offensichtlich vollzogen wird, im Nachgang abgedichtet wird, damit es zu keinem Schaden des Daches, des Tragwerkes oder der Isolation kommt.

Die EP 2 868 840 A1 zeigt eine Anschlagvorrichtung für eine Absturzsicherung mit einer Gewindestange, wobei die Gewindestange einen Kippdübel bzw. Kippbalken aufweist. Das Umgeben der Gewindestange mit einer Stützhülse ist nicht gezeigt, so dass es der aus der EP 2 868 840 A1 bekannten Vorrichtung an der Stabilität mangelt. Bei der in der EP 2 868 840 A1 gezeigten Anschlagvorrichtung für Absturzsicherungen geht es insbesondere um die besondere Wahl des Kippbalkens, welcher in Art und Ausführung ein Durchschneiden einer dünnwandigen Dachhaut verhindern soll.

Nachteilig an der EP 2 868 840 A1 ist des Weiteren dass die Stützhülse, die auch als Stützrohr bezeichnet wird, außerhalb der Isolierung und der Dachhaut liegt. Die in der EP 2 868 840 A1 gezeigte Konstruktion nimmt keinen Bezug auf die Abdichtung der Dachhaut. Die Dachdurchführung und insbesondere der gezeigte Anschlagpunkt lässt eine 100 % ige Dachabdichtung nicht zu, da die Gewindestange auch die Abdeckkappe der Stützhülse durchdringt und über das Gewinde wieder Regenwasser eintreten kann. Zudem wird in der EP 2 868 840 A1 die Durchführung nachträglich nicht wieder isoliert. Hierdurch entstehen Wärmebrücken.

Die DE 10 2011 078 114 A1 zeigt eine Absturzsicherung zur Sicherung von Personen an Gebäudedächern oder Fassaden. Aus der DE 10 2011 078 114 A1 ist zwar bekannt, dass eine Gewindestange von einer Hülse umgeben ist. Die Hülse wird in der DE 10 2011 078 114 A1 als Stützrohr bezeichnet. Das aus der DE 10 2011 078 114 A1 bekannte Stützrohr liegt am unteren Ende auf einem zentralen Bereich einer Grundplatte auf. Das Stützrohr ist mittels einer Schraubverbindung mit der Grundplatte verbunden. Dies hat den Nachteil, dass das Stützrohr immer auf einem Teil des Daches aufliegt und die Grundplatte, auf der das Stützrohr aufliegt, mit dem Dach verschraubt ist. Die Gewindestange, die vom Stützrohr umgeben ist, wird ebenfalls mit der Grundplatte verschraubt. Dies hat als Nachteil, dass eine Verschraubung der Grundplatte direkt von oben auf dem Dach erfolgt und die Dachhaut schädigen kann. Nirgendwo in der DE 10 2011 078 114 A1 sind Angaben zur Dimensionierung des Stützrohres gemacht. Insbesondere geht aus der DE 10 2011 078 114 A1 nicht hervor, wie das Stützrohr dimensioniert sein muss, um die Stabilität der Konstruktion zu verbessern.

Die in der DE 10 2011 078 114 A1 gezeigte Absturzsicherung ist auf einer festen, massiven Dacheindeckung (Betondecke oder vergleichbar) verschraubt. Dies erfolgt über eine Grundplatte. An der Grundplatte wiederum wird zentrisch eine Gewindestange eingesetzt, verschraubt und gekontert.

Bei der DE 10 2011 078 114 A1 wird kein Kippdübel verwendet. Die Montage kann daher nur auf einer festen Dacheindeckung, z.B. Betondecke oder massive Holzdecke, ausgeführt oder aufwendig von oben und unten montiert werden.

Des Weiteren ist in der DE 10 2011 078 114A1 die Abdichtung zur Dachhaut nicht näher beschrieben und entspricht nicht den Normen. Eine Stützhülse bzw. Stützrohr und Isolation der Dachhaut ist in der DE 10 2011 078 114 A1 nicht gezeigt. Eine Stützhülse oder ein Stützrohr mit einem Mindestdurchmesser ist in der DE 10 2011 078 114 A1 weder gezeigt noch nahegelegt. Auch Angaben zur Größe des Durchmessers sind nicht gemacht.

Die US 4,932,185 B1 beschreibt für eine Absturzsicherung wiederrum ein Befestigungselement, das eine Gewindestange umfasst, die von einer zirkulären Hülse umgeben wird. Die Gewindestange wird durch die Hülse und die Dachhaut hindurchgeführt und von unten an der Dachhaut verschraubt. Angaben über die Dimension der Stützhülse werden in der US 4,932,185 B1 nicht gemacht.

Nachteilig an der US 4,932,185 B1 ist, dass die Gesamtkonstruktion oben und unten gleichzeitig vorbereitet werden muss. Der Kegelflansch, der in der US 4,932,185 B1 gezeigt ist, liegt direkt auf der Isolationsschicht auf und dient mit seinen breiten Flanschkegeln ausschließlich als An- und Abdichtungsfläche für die Dachhaut. Eine Abdeckkappe umschließt die zylindrische Stützhülse und den Kegelflansch an dessen oberem Ende. Die Abdeckkappe wird über eine lange Sechskant-Schraube, welche mit einem Anschlagpunkt wasserdicht verschweißt wurde über eine Druckplatte und Beilagscheibe, von unten festgezogen. Es ist somit notwendig Vorbereitungen und Arbeiten auf dem Dach als auch unter dem Dach durchzuführen.

Des Weiteren ist die Stützhülse nicht isoliert, so dass die gesamte Konstruktion eine Wärmebrücke darstellt. Zwischen Anschlagpunkt und Abdeckkappe ist keine Dichtung gezeigt. Wasser, insbesondere Schmelzwasser kann durch Kapilarwirkung ins Innere der Stützhülse eindringen. Die gesamte Konstruktion ist nicht isoliert und daher besteht die Gefahr der Kondensation. Selbst wenn kein Regenwasser oder Schmelzwasser in die Konstruktion eintreten sollte, wird an der Gesamtkonstruktion Kondensat auftreten, welches die Isolation durchfeuchtet oder in der Halle zu Boden tropft. Die Gesamtkonstruktion entspricht daher weder dem Stand der Technik noch der DIN 18531 oder der Flachdachrichtlinie von 2019.

Die US 2015/0218824 A1 zeigt eine Befestigungsvorrichtung für Dachaufbauten mit einer Hülse, durch die eine Schraube hindurchgeführt wird. In der US 2015/0218824 A1 ist ein Montagebolzen offenbart, der mit einer Gewindestange verschraubt ist. In der US 2015/0218824 A1 erfolgt wiederrum die Befestigung der Befestigungsvorrichtung direkt auf dem Dachaufbau.

Aufgabe der Erfindung ist es, die zuvor beschriebenen Nachteile des Standes der Technik zu vermeiden.

Insbesondere soll sichergestellt werden, dass die Dachbefestigungsvorrichtung über eine ausreichende Stabilität verfügt. Besonders bevorzugt ist es, wenn Querkräfte sicher aufgenommen werden können. Durch die Verschraubung der unteren Platte durch die dünnwandige Dachhaut hindurch wird am Fußpunkt der Befestigungsvorrichtung ein Verrutschen der Gesamtkonstruktion durch auftretende Querkräfte ausgeschlossen Mit Hilfe eines Kippdübels, ist auch das Verrutschen der Gesamtkonstruktion ausgeschlossen.

Erfindungsgemäß werden die zuvor beschriebene Aufgabe und Probleme dadurch gelöst, dass eine Befestigungseinrichtung für Aufbauten, insbesondere Solarpanels und/oder Elemente von Solaranlagen und/oder aber auch Absturzsicherungen auf Dächern, insbesondere auf Flachdächern, angegeben wird, wobei die Befestigungseinrichtung wenigstens eine Gewindestange und wenigstens einen an der Gewindestange angeschlossenes Befestigungselement, bevorzugt einen Dübel, insbesondere einen Kippdübel, aufweist. Erfindungsgemäß ist vorgesehen, dass die Befestigungseinrichtung eine Stützhülse umfasst, welche die Gewindestange umschließt. Die Stützhülse dient der Verbreiterung der Befestigungsfläche. Ein weiterer Vorteil der Stützhülse ist, dass der Aufbau, insbesondere die Befestigungseinrichtung versteift bzw. ausgesteift wird. Durch die Stützhülse in Verbindung mit der Platte 30 erfolgt eine Verbreiterung der Auflagefläche und/oder Abstützung. Die Verbreiterung der Auflagefläche sorgt dafür, dass die Befestigung über eine hohe Stabilität verfügt. Besonders bevorzugt ist es, wenn die Stützhülse mit runder Form einen Durchmesser im Bereich 50 - 200 mm, bevorzugt 80 - 150 mm aufweist. Eine derartige Dimensionierung hat den Vorteil, dass zum einen eine ausreichende Stützfläche zur Verfügung gestellt wird, zum anderen eine ausreichende Anzahl an Stützhülsen gesetzt werden kann. Durch die Erfindung wird vorteilhafterweise ein Durchschneiden einer Dachhaut, wie in der EP 2 868 840 A1 verhindert, da gemäß der Erfindung der Kippdübel gegen die untere Platte, die im Wesentlichen mindestens oder in der Regel den gleichen Durchmesser wie die Stützhülse aufweist, beispielsweise mit einer Mutter kraft- und formschlüssig mit beispielsweise der dünnwandigen Dachhaut verschraubt und verspannt wird.

Neben der Befestigungseinrichtung für Aufbauten wird durch die Erfindung zusätzlich ein Verfahren zur Montage einer Befestigungseinrichtung für Aufbauten auf einem Dach, insbesondere einem Flachdach angegeben, wobei das Dach, insbesondere das Flachdach, eine Dämmschicht aufweist, sowie eine Decke. Erfindungsgemäß ist vorgesehen, dass in einem ersten Schritt eine Öffnung, bevorzugt eine kreisrunde Öffnung, in eine Dämmschicht, die auf der Decke des Flachdaches, insbesondere dem Blech des Flachdaches, aufliegt, eingebracht wird. Im zweiten Schritt wird im Zentrum des Kreisausschnitts der Isolation eine Bohrung in die Decke/Blech ausgeführt. Sodann wird in die Öffnung der Dämmschicht eine erste Metallplatte eingesetzt und auf die Decke, insbesondere das Blech des Flachdaches, aufgebracht. Bevorzugt ist die Metallplatte kreisrund mit einem Durchmesser ausgebildet. In einer besonders bevorzugten Ausführungsform beträgt der Durchmesser 50 - 200 mm, insbesondere 80 - 150 mm. In einem dritten Schritt wird ein länglicher Körper, insbesondere eine Gewindestange, durch eine Bohrung in der Metallplatte und die Decke/Blech, bevorzugt mit einem Dübel, insbesondere einem Kippdübel, hindurchgeführt und anschließend der längliche Körper, insbesondere die Gewindestange, mit einem Befestigungsmittel, bevorzugt einer Mutter, fest mit der ersten Platte verbunden. Als dritter Schritt wird eine Stützhülse, die den länglichen Körper, insbesondere die Gewindestange umgibt, in die Öffnung der Isolationsschicht eingesetzt. Die Stützhülse vergrößert die Auflagefläche, insbesondere durch einen vergrößerten Durchmesser. Durch den vergrößerten Durchmesser wird insbesondere die Stabilität des Aufbaues erhöht. Der Durchmesser der Stützhülse liegt bevorzugt im Bereich 50 - 200 mm, insbesondere 80 - 150 mm und stimmt bevorzugt mit dem der Abdeckplatte überein. Selbstverständlich ist es auch möglich, dass die Abdeckplatte im Durchmesser größer gewählt wird, wie der Durchmesser der Stützhülse. Über den Montagebolzen, der bevorzugt ein M8 Innengewinde aufweist, werden die obere bzw. Abdeckplatte und untere Platte über die Stützhülse zentral verpresst. Je größer der Durchmesser der Stützhülse ist, umso größer ist die Stützfläche und umso größer sind die Kippmomente, die aufgebracht werden müssen, um bspw. die Befestigungsvorrichtung zu verkippen. Besonders bevorzugt ist es, wenn die Stützhülse einen Durchmesser im Bereich 50 - 200 mm, insbesondere 80 - 150 mm, hat. Bei Werten des Durchmessers größer als 200 mm wird die Stützhülse zu groß, um eine ausreichende Anzahl an Stützhülsen setzen zu können. Ist der Durchmesser hingegen zu klein, insbesondere kleiner als 80 mm, so ist die Stützfläche nicht ausreichend groß, um die entsprechenden Kippmomente aufnehmen zu können. Bevorzugt erfolgt die Auslegung so, dass die erforderlichen Kippmomente aufgenommen werden können.

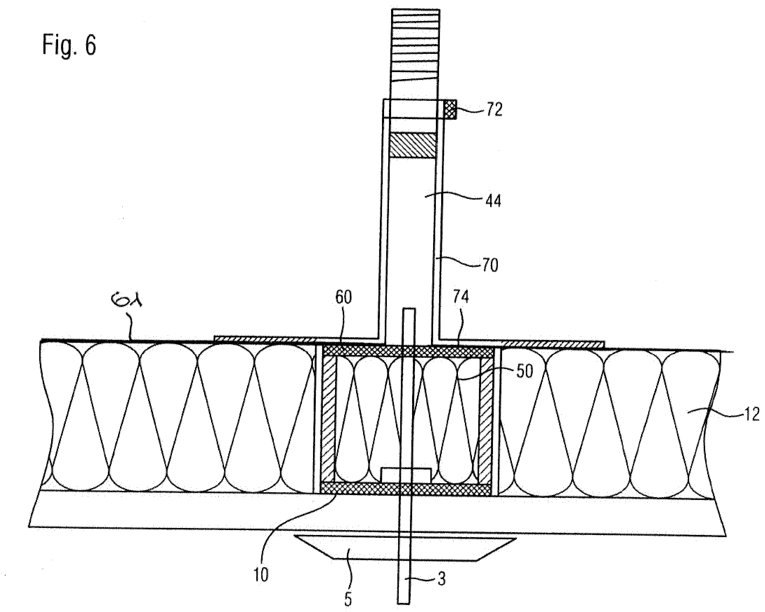

Nachdem insbesondere der Kippdübel, der durch eine Öffnung in der ersten Metallplatte hindurchgeführt wurde, aufgeklappt ist und die Gewindestange sicher in der Decke hält, wird eine Stützhülse, die den länglichen Körper, insbesondere die Gewindestange, umgibt, in die in die Isolationsschicht eingebrachte Öffnung eingesetzt. Hierdurch wird, wie zuvor beschrieben, eine vergrößerte Auflagefläche zur Verfügung gestellt und die Stabilität des Aufbaues erhöht. Zwischen die Stützhülse und den in die Stützhülse eingebrachten länglichen Körper, insbesondere die Gewindestange wird sodann ein Isolationsmaterial eingebracht, um die Isolationsschicht, die zum Einbringen der Stützhülse ausgeschnitten wurde, zu komplettieren. Nachdem dies erfolgt ist, wird auf die Stützhülse eine zweite Platte aufgesetzt, bevorzugt eine Metallplatte, durch welche das in die Stützhülse eingebrachte Isolationsmaterial abgedeckt wird. Die zweite Platte wird ebenfalls mit dem Montagebolzen verschraubt. Hierzu wird nach dem Auflegen der zweiten Platte die Stützhülse auf die Gewindestange mit dem Montagebolzen verschraubt. Der Montagebolzen verbindet die erste Platte, die Stützhülse bzw. das Hülsenelement und die zweite Platte formschlüssig und kraftschlüssig. Durch die zweite Platte, insbesondere Metallplatte wird erreicht, dass eine gleichmäßige und insbesondere auch großflächige Kraftübertragung flächenbündig zur Dachhaut aufgebaut wird und ein um vielfaches höhere Querkräfte gegenüber dem Stand der Technik aufgenommen werden können. Wird eine erfindungsgemäße Konstruktion wie in Fig. 6 dieser Anmeldung gezeigt, ausgeführt, so können mit einer Gewindestange M8 der Güte 8.8, bei zweifacher Sicherheit, Zugkräfte von mindestens 12 KN und Querkräfte am Fußpunkt der ersten, unteren Platte von bis zu 9 KN aufgenommen werden. Am Fußpunkt der oberen, zweiten Platte bleibt die zulässige Zugkraft unverändert. Die maximal mögliche Querkraft halbiert sich an diesem Punkt auf 4,5 KN.

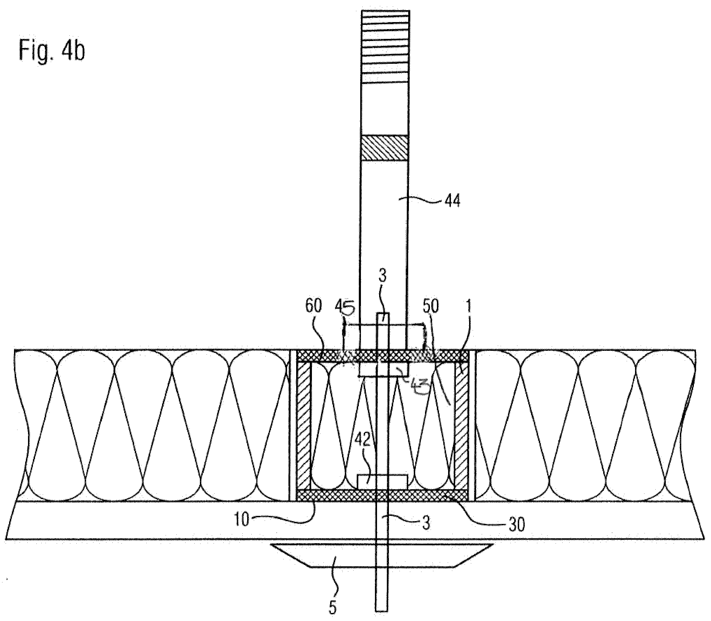

Bei einer Ausführung, wie in Fig. 4b gezeigt, bleibt die Zugkraft am unteren Fußpunkt der ersten Platte als auch am oberen Fußpunkt der zweiten Platte und Verwendung einer Gewindestange M8 der Güte 8.8, unverändert bei maximal 12 KN. Durch die Ausführung der zweiten Platte mit einem M16 Gewinde und Verwendung einer Kontermutter M16 am Montagebolzen, welche den Montagebolzen zur zweiten Platte zusätzlich sichert, können am Fußpunkt der zweiten Platte Querkräfte von bis zu 15 KN sicher aufgenommen werden. Das Einbringen einer weiteren Mutter zur Sicherung der zweiten Platte ist in Fig. 4b gezeigt.

Um den Montagebolzen und die Gesamtkonstruktion gemäß DIN 18531 und den Flachdachrichtlinien normgerecht abzudichten, wird eine Dichtungsmanschette über einen Montagebolzen gezogen, wobei mit Hilfe der Dichtungsmanschette eine Abdichtung zum Bestand sichergestellt wird. Dies wird dadurch erreicht, dass die Dichtungsmanschette auf die ursprüngliche Dachhaut bzw. die wasserführende Schicht und/oder die Dachabdichtung geschweißt oder geklebt wird. Besonders bevorzugt ist es, wenn die Dichtungsmanschette für PVC, FPO, Bitumenschweißbahnen als auch für EPDM-Folien ausgelegt ist. Es wird immer die Dichtungsmanschette eingesetzt, welche zur verwendeten Dachhaut/Folie passt, um die Herstellergarantie für die Dachdichtigkeit zu erhalten. Bei Verwendung und Verschweißung von gleichen Materialien gilt die Herstellerhaftung - sofern die Schweißung oder Verklebung (EPDM) gemäß den Herstellerangaben durchgeführt wurde. Jede der oben genannten Folien ist auf der wasserführenden Schicht verschweißt und verklebt. Bei Verwendung von gleichen Materialien handelt es sich somit nicht um eine Verletzung der wasserführenden Schicht der Folie, sondern um einen Standardprozess innerhalb der Herstellergewährleistung.

Um die Solarpanels oder die Aufbauten einer Solaranlage an bzw. mit der Befestigungseinrichtung zu befestigen ist vorgesehen, dass die Befestigungseinrichtung einen auf den Montagebolzen aufgebrachten Aufsatz, insbesondere einen Konsolenaufsatz, umfasst. Bevorzugt weist der Konsolenaufsatz ein Profil auf, mit dem die Elemente von Solaranlagen, insbesondere Solarpaneele, befestigt werden können. Alternativ können mit der Befestigungseinrichtung auch Elemente einer Absturzsicherung, z.B. Sekuranten, oder auch Wärmepumpen, Lüftungs- und Klimageräte, etc. befestigt werden.

Um die Öffnung in der Isolationsschicht abzuschließen, weist die Stützhülse eine Höhe H und einen Durchmesser D auf, wobei die Höhe H der Stützhülse mindestens die Höhe H_{Isolation} der Isolationsschicht aufweist. Die Stützhülse wird immer auf die Höhe der vorhandenen Isolation angepasst. Erfindungsgemäß ist vorgesehen, dass die Kombination aus Stützhülse in Verbindung mit der ersten Platte und der zweiten Platte die Höhe der Isolation nicht um mehr als 5 mm übersteigt. Diese Vorgabe wird dadurch erzielt, dass die maximale Länge der Stützhülse gleich der Höhe der Isolation - 20 mm beträgt. Beträgt die Höhe der Isolation 140 mm bedeutet dieses, dass die Höhe der Stützhülse maximal 120 mm beträgt. Die Höhe der Isolation hängt im Allgemeinen vom Baujahr des Gebäudes ab. Je älter ein Gebäude ist, desto geringer ist die Isolationshöhe, z. B. bei Gebäuden aus den Jahren 1980 bis 1990 liegt die Dämmschicht bei einer Höhe von 100 - 120 mm. Alternativ könnte auch eine PU-Dämmung mit 60 mm vorgefunden werden. Die mehrheitlich zu diesem Zeitpunkt verwendete Isolation war eine feste Mineralfaserplatte mit einem Raumgewicht von ca. 70 kg/cm³ und einer Dämmdicke von 80 mm. Heutige Hallen werden in der Regel aus einer Kombination von PU- und Polystyrol Dämmplatten und einer Gesamthöhe von mindestens 140 mm ausgeführt. Es gibt jedoch auch Hallen, bei welchen mehrlagige Mineralfaserplatten mit einem Raumgewicht von mindestens 90KG/cm³ und einer Höhe von 200 - 240 mm zum Einsatz kommen.

Die Höhe der Stützhülse ist somit an die Höhe der Isolation gebunden bzw. angepasst. Je nach dem Durchmesser D der Stützhülse, kann die Auflagefläche für die zweite Platte, bevorzugt eine Metallplatte, variiert und damit die von der Stützhülse zur Verfügung gestellte Versteifung sowie die Kippmomente eingestellt werden.

Bei der ersten Platte bzw. unteren Platte, die auf dem Dach angebracht wird, handelt es sich bevorzugt um eine Stahlplatte, die bevorzugt mit der Gewindestange fest verbunden ist, beispielsweise durch eine Mutter, die fest verschraubt wird. Bei der auf die Stützhülse nach Einführung in die Öffnung aufgebrachten zweiten Platte, der oberen oder der sogenannten Abdeckplatte handelt es sich ebenfalls um eine Stahlplatte, welche über den Montagebolzen fest form- und kraftschlüssig verbunden wird. Bevorzugt sind die Durchmesser der ersten Platte und der zweiten Platte bzw. der oberen und der unteren Platte im Wesentlichen gleich.

Die Dichtmanschette, welche den Montagebolzen umgibt, weist ebenfalls einen Durchmesser auf. Bevorzugt ist der Innendurchmesser der Dichtmanschette ungefähr das 1,1-fache des Durchmessers des Montagebolzens. Die Höhe des Montagebolzens beträgt bevorzugt mindestens 190 mm. Je nach Montagesystem und Anwendung kann er aber auch länger sein. Beträgt beispielsweise der Durchmesser der Stützhülse ungefähr 110 mm, so beträgt der Durchmesser der Dichtmanschette am Fuß zur Dachhaut im Verhältnis 1:2, ca. 220 mm.

Um eine maximale Auslastung des Befestigungssystems zur Verfügung zu stellen, beträgt das Verhältnis der Höhe der Stützhülse zum Montagebolzen mindestens 1:2. Hat beispielsweise die Stützhülse einen Durchmesser von 100 mm und die Höhe der Stützhülse beträgt 140 mm, dann ergibt sich aus dieser Forderung, dass die Höhe des Montagebolzens, der die Befestigung von erster Platte, zweiter Platte und Hülse ermöglicht, über der Dachabdichtung zwischen 2 x den Durchmesser der Stützhülse bis maximal 2 x der Höhe der Stützhülse beträgt. Die Dichtmanschette muss mindestens 150 mm über der Dachhaut enden. Die Dichtmanschette überdeckt/umschließt neben der zweiten Stahlplatte auch den auf die Gewindestange aufgeschraubten Montagebolzen, der für eine form- und kraftschlüssige Verbindung von erster und zweiter Platte, sowie der Stützhülse, sorgt.

Sämtliche im Stand der Technik auftretenden Nachteile, insbesondere Dichtigkeitsprobleme und das Eindringen von Wasser in die Dachkonstruktion bzw. die Isolierung werden durch die erfindungsgemäße Konstruktion vermieden.

Bei der erfindungsgemäßen Konstruktion stellt der Kippdübel, die erste Platte und die Mutter einen Kraft- und Formschluss zu Decke/Trapezblech her. Durch den Einsatz der Stützhülse, welche auf der unteren bzw. ersten Platte aufsteht und von der oberen bzw. zweiten Platte über den Montagebolzen ein zweites Mal kraft- und formschlüssig verbunden werden kann, können Kräfte, insbesondere auch dynamische Kräfte vollständig aufgenommen und in das Tragwerk bspw. die Decke/Trapezblech übertragen werden.

Die Herstellung der Dichtigkeit erfolgt über die Dichtmanschette, welche vorzugsweise aus dem gleichen Material besteht, wie die Dachhaut selbst, z.B. PVC, FPO, Bitumen Polymer Schweißbahn und EPDM.

Die Abdichtung erfolgt somit über die Dichtmanschette, wie die Dachhaut selbst. Die Abdichtung erfolgt ca. 15 cm über der wasserführenden Schicht des jeweiligen Flachdaches. Am oberen Ende der Dichtmanschette erfolgt die Abdichtung zum Montagebolzen mittels einer handelsüblichen Schlauchschelle.

Die erfindungsgemäße Befestigungsvorrichtung zeichnet sich durch eine normgerechte Anbindung bzw. Abdichtung der Dachdurchführung des Anschlagpunktes aus. Insbesondere wird ein norm- und fachgerechter Anschluss an die Dachhaut gezeigt. Des Weiteren zeichnet sich die Befestigungsvorrichtung durch die Verwendung einer Stützhülse in der Ebene der Isolation aus.

Die erfindungsgemäße Konstruktion erlaubt im Gegensatz zum Stand der Technik eine komplette Montage des Anschlagpunktes ausschließlich von oben .

Des Weiteren besteht die Stützhülse bevorzugt aus einem isolierenden Werkstoff, z.B. Kunststoff, um Wärmebrücken zu vermeiden und entspricht in der Länge der Stützhülse der Höhe der Isolation. Der Standard-Kippdübel ist direkt unter der dünnwandigen Dachhaut angeordnet. Damit dieser bei möglichen, hohen Zugkräften die dünnwandige Dachhaut nicht durchschneidet, wird direkt die Grundplatte auf der dünnwandigen Dachhaut von oben aufgebracht und an diesem Fußpunkt der Befestigungsvorrichtung mittels einer Standardmutter kraft- und formschlüssig verbunden. Dadurch wird ein Ausreißen der dünnwandigen Dachhaut (Trapezblech), bei auftretenden hohen Zugkräften als auch ein verrutschen der Befestigungsvorrichtung am Fußpunkt, durch auftretende Querkräfte, ausgeschlossen. Dass die ausgeschnittene Isolierung/Dämmung wieder eingebracht wird, entstehen keine Wärmebrücken durch das Einbringen des Anschlagpunktes. Des Weiteren wird die Stützhülse mittels der oberen Grundplatte/Druckplatte über den Montagebolzen fest gegen die untere Grundplatte kraft- und formschlüssig verschraubt. Die Abdichtung des Anschlagpunktes bzw. der Dachöffnung mittels einer Dichtmanschette entspricht der DIN 18531, sowie der Flachdachrichtlinie des Dachdeckerhandwerks von 2019.

Die erfindungsgemäße Befestigungseinrichtung findet insbesondere bei Solaranlagen, bevorzugt zum Befestigen von Solarpanels bzw. Solarmodulen, Verwendung. Demgemäß umfasst die Erfindung auch eine Solaranlage mit wenigstens einem Solarpanel, wobei die Solarpanels mit wenigstens einer Befestigungseinrichtung, wie beschrieben, am Dach befestigt ist. Um das Solarmodul bzw. Solarpanel am Dach, insbesondere Flachdach mit der erfindungsgemäßen Befestigungseinrichtung befestigen zu können, wird zwischen Solarpanel und Befestigungseinrichtung wenigstens eine Schiene vorgesehen. Bevorzugt ist bei einer Solaranlage mit erfindungsgemäßer Befestigungseinrichtung vorgesehen, dass eine Dichtungsmanschette um den Montagebolzen, der die Gewindestange aufnimmt, angeordnet ist. Um ein Eindringen von Wasser zu verhindern ist bevorzugt die Dichtmanschette mindestens 150 mm über einer wasserführenden Dachhaut angeordnet. Eine Möglichkeit die Dichtmanschette mit der Dachhaut und/oder Dachabdichtung zu verbinden ist das Schweißen und/oder Kleben.

Die Erfindung soll nachfolgend anhand der Figuren näher beschrieben werden.

Es zeigen:
- Figur 1a - 1b:: Teil der erfindungsgemäßen Befestigung mit durch eine Stützhülse hindurchgeführter Gewindestange und Kippdübel zum Befestigen im Bereich des Daches in Seitenansicht und Draufsicht
- Figur 2:: Flachdach gemäß Bestand mit auf das Dach aufgebrachter Dachisolierung mit Dachhaut/Dachabdichtung
- Figur 3:: Flachdach mit erfindungsgemäßem Befestigungselement und in die Dachisolierung des Flachdaches eingebrachter Öffnung mit eingesetzter Gewindestange, Stützhülse, Kippdübel und erster Platte und Mutter
- Figur 4a:: Flachdach mit erfindungsgemäßem Befestigungselement und mit Dämmmaterial verfüllter Öffnung und weiterer, zweiter Platte, die auf die Stützhülse aufgebracht ist, sowie Montagebolzen, der auf die Gewindestange aufgeschraubt ist
- Figur 4b:: Flachdach mit erfindungsgemäßem Befestigungselement gemäß Figur 4a mit zusätzlicher Verschraubung/Konterung am Montagebolzen gegen die zweite Platte von oben.
- Figur 5a-b:: Flachdach mit auf dem Flachdach angeordneter Schiene befestigt nach dem Stand der Technik.
- Figur 6:: Flachdach mit erfindungsgemäßem Befestigungselement mit Stützhülse, zwei Platten, erster und zweiter Platte und über dem Montagebolzen aufgebrachter Dichtungsmanschette als Befestigungselement für eine Schiene.

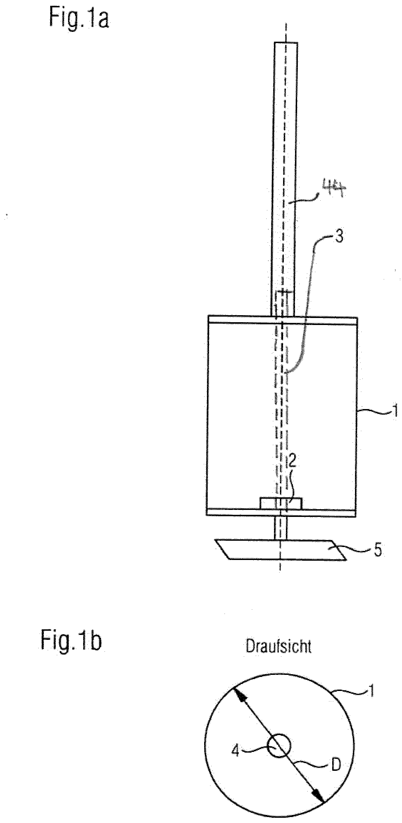

Figur 1a zeigt in einer Seitenansicht und Figur 1b in einer Draufsicht Teile einer erfindungsgemäßen Befestigungseinrichtung, Die Befestigungseinrichtung umfasst eine Stützhülse 1, durch die eine Gewindestange 3 hindurchgeführt wird, wie in Figur 1 gezeigt. Die Gewindestange 3 wird durch die in der Draufsicht dargestellte Öffnung 4 der Hülse bzw. Stützhülse 1 hindurchgeführt. Die Gewindestange 3 ist mit einem speziellen Dübel, bspw. einem Kippdübel 5 versehen, der die Stützhülse 1 und die Gewindestange 3 über eine Mutter 2 fest mit dem Tragwerk, insbesondere einer Decke, beispielsweise eines Flachdaches, beispielsweise eines Flachdaches aus Trapezblech, verbindet. Des Weiteren dargestellt ist der Montagebolzen 44. Des Weiteren ist der Durchmesser D der Stützhülse 1 in der Draufsicht gemäß Figur 1b angegeben.

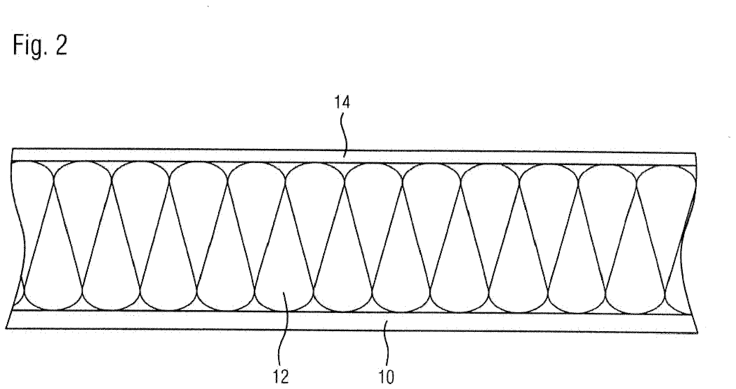

In Figur 2 ist die auf ein Dach 10, insbesondere ein Flachdach, aufgebrachte Isolationsschicht 12 bzw. Dachisolierung gezeigt, wobei die Dachisolierung mit einer Dachabdichtung 14, die auch als Dachhaut bezeichnet werden kann, versehen ist, gemäß dem Bestand. Die Dachabdichtung bzw. Dachhaut 14 kann beispielsweise PVC, ein Bitumen oder anderweitige wasserabweisende Materialien sein. Unterhalb der Isolierung 12 ist ein statisches Dachelement 10 eines Daches, insbesondere Flachdaches, beispielsweise aus Blech, Beton oder Holz, angeordnet.

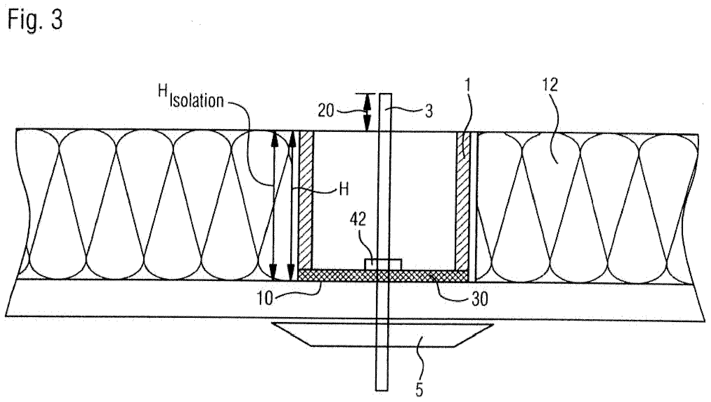

In Figur 3 ist das Einbringen von Teilen der erfindungsgemäßen Befestigungseinrichtung mit einer Stützhülse 1 und einer Gewindestange 3 in die Dachisolierung 12 und das Verbinden der Gewindestange 3 bzw. der Stützhülse 1 mit dem Dach, insbesondere dem Flachdach, dargestellt. Die im Wesentlichen kreisrund ausgelegte Stützhülse weist einen Durchmesser im Bereich 50 bis 200 mm, insbesondere 80 bis 150 mm, bevorzugt 100 bis 120 mm, auf. Diese Wahl garantiert zum einen, dass ausreichend Kippmomente von der Stützhülse aufgenommen werden können, zum anderen kann bei einem derartigen Durchmesser eine ausreichende Anzahl an Stützhülsen gesetzt werden.

Zunächst wird bei der erfindungsgemäßen Befestigungseinrichtung bevorzugt vor Ort die Dachhaut beispielsweise mit einem Kreislochbohrer geöffnet. In dem ausgebohrten Bereich mit einem Durchmesser von bspw. 111 mm wird in der Isolierung ein Kreisloch ausgebildet. In das ausgebohrte Kreisloch wird nach dem Ausbohren zunächst eine Zentralbohrung in die Decke, für die jeweilige Befestigungstechnik mit Befestigungselement (z.B. Kippdübel) ausgeführt und eine erste Platte 30, mit bevorzugt einem Durchmesser von 50 bis 200 mm, insbesondere 80 bis 150 mm bevorzugt eine Stahlplatte, eingesetzt, die auf dem Dachelement, beispielsweise aus Blech oder Beton flächig aufliegt. Die auf dem Dachelement aufliegende erste Platte 30, die eine Stahlplatte sein kann, sorgt für eine gleichmäßig Kraftübertragung der über die Gewindestange eingeleiteten Kräfte. Die erste Platte 30 weist eine Öffnung 4 auf, durch die die Gewindestange 3 hindurchgeführt wird. Bevorzugt weist die zum Ausbohren des Isolationsmaterials angesetzte Bohrkrone des Kreislochbohrers einen Durchmesser auf, der ca. 10 mm breiter als die in die Isolierung 12 eingesetzte Stützhülse 1 ist. Weist die Stützhülse 1 beispielsweise eine Breite bzw. einen Durchmesser von 100 mm auf, so beträgt der Durchmesser der Bohrkrone des Kreislochbohrers 111 mm. So wird sichergestellt, dass die Stützhülse 1 formschlüssig in die Bohrung eingesetzt werden kann.

Die Gewindestange 3 wird mit einem Befestigungsmittel, beispielsweise einer Mutter 42, an der ersten Platte 30 bspw. durch Aufschrauben von oben befestigt. Mit der Mutter 42 kann zudem auch die Gewindestange auf die richtige Höhe gebracht werden. Bevorzugt ist es so, dass die Gewindestange mit unterschiedlichen Befestigungstechniken, umfassend Befestigungselemente, an der Decke 10 befestigt werden. So finden bei einem Blechdach als Decke bevorzugt Kippdübel Verwendung, bei einem Betondach als Decke kann auch eine Ankerstange eingesetzt werden. Wird ein Kippdübel eingesetzt, so wird am unteren Ende der Gewindestange ein Kippdübel 5 durch eine Öffnung in der ersten Platte 30, bevorzugt einer Stahlplatte, hindurchgeführt und unterhalb der Decke, insbesondere dem Blechdach aufgespreizt, so dass eine feste Verbindung der Gewindestange sowie der ersten Platte 30 an der Decke bzw. dem Blechdach 10 gewährleistet ist. Anschließend wird die erfindungsgemäße Stützhülse 1 in die Öffnung eingesetzt, wobei die Stützhülse 1 die Gewindestange 3 umgibt und den Bereich in dem die Isolierung entfernt wurde. Die Gewindestange 3 wird wie in Figur 3 wie dargestellt an der Decke 10 bzw. dem Blechdach mit Hilfe des Kippdübels 5 gehalten. Deutlich zu erkennen ist auch die Stützhülse, die auf der ersten Platte 30 aufsteht. Ebenfalls zu erkennen ist die Höhe H der Stützhülse, die mit der Höhe H_{Isolation} und damit der Dicke der auf die Decke 30 aufgebrachten Isolationsschicht 12 übereinstimmt. Die Gewindestange 3 wird in der Höhe mittels der Mutter 42 eingestellt und an der ersten Platte 30 mit der Mutter 42 befestigt.. In der dargestellten Ausführungsform ragt die Gewindestange ungefähr 20 mm über die Höhe der Stützhülse 1 hinaus. Auf das Gewinde 3 wird dann ein Montagebolzen als Abschluss aufgebracht. Dies zeigen die nachfolgenden Zeichnungen. Die 20 mm - 25 mm, die die Gewindestange über die Höhe der Hülse bzw. Stützhülse hinausragt, greifen in ein Innengewinde eines Montagebolzens ein, mit dem erste und zweite Stahlplatte, sowie die Hülse bzw. Stützhülse form- und kraftschlüssig verbunden werden.

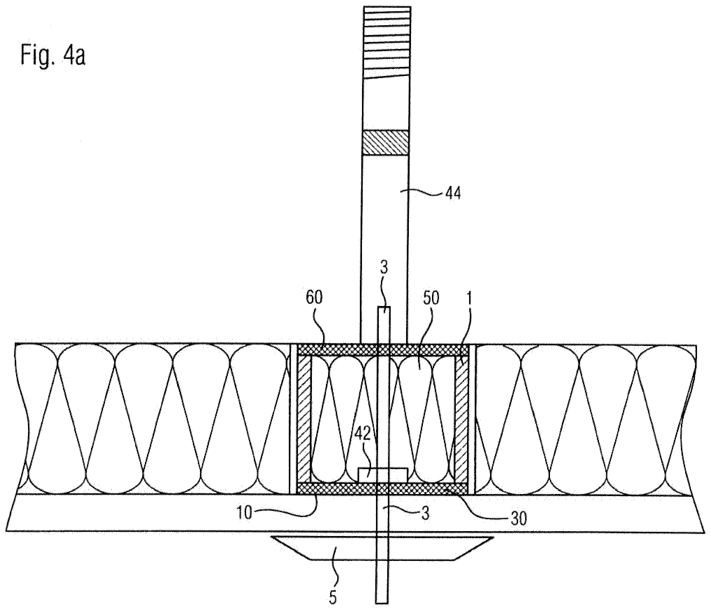

In Figur 4a ist dargestellt, wie in einem weiteren Schritt nach Einsetzen der Stützhülse in den ausgebohrten Bereich der Isolierung, die zunächst entnommene Isolierung in die Stützhülse 1 eingebracht wird. Die in die Stützhülse 1 eingesetzte Isolierung ist mit Bezugsziffer 50 gekennzeichnet. Gleiche Bauteile wie in Figur 3 tragen in Figur 4a und 4b dieselben Bezugsziffern. Die mit Isolationsmaterial gefüllte Öffnung, in welche die Stützhülse bevorzugt formschlüssig eingesetzt ist, wird mit Hilfe einer weiteren, einer sogenannten zweiten Platte 60, verschlossen. Die zweite Platte 60 liegt wiederum auf der Stützhülse 1 auf. Die weitere Platte 60 stellt eine gleichmäßige Kraftübertragung flächenbündig zur Dachhaut sicher. Die zweite Platte 60 kann ebenfalls eine Stahlplatte sein. Nach Auflegen der zweiten Platte 60 wird die Öffnung, in die die Stützhülse 1 eingesetzt ist, verschlossen, in dem ein Montagebolzen 44, der auf das Gewinde der Gewindestange 3 aufgebracht wird, auf dem Gewinde verschraubt wird, bis der Montagebolzen 44 auf der zweiten Platte aufsteht. Der Montagebolzen 44 verbindet dann form- und kraftschlüssig die erste Platte 30, die Hülse 1 und die zweite Platte 60, die sogenannte Abdeckplatte, die bei einem kreisrunden Durchmesser, einem bevorzugten Durchmesser im Bereich 50 bis 200 mm, insbesondere 80 mm bis 150 mm hat. Der Montagebolzen umfasst mit seinem Innengewinde aufgeschraubt die Gewindestange 3 . Bei dem Innengewinde handelt es sich bevorzugt um ein M8 Gewinde. Die Dicke von erster Platte 30 und zweiter Platte 60 beträgt bevorzugt 5 mm.

Figur 4b zeigt eine alternative Ausführungsform der Erfindung. Gleiche Bauteile wie in Figur 4a tragen gleiche Bezugsziffern. Der Unterschied der Ausführungsform in Figur 4b zu Figur 4a ist, dass eine zweite Mutter 43 vorgesehen ist und dass der Montagebolzen nicht nur mit dem Innengewinde über die zweite Platte die Verpressung bzw. den Kraft- und Formschluss von der ersten Platte, Stützhülse und der Gewindestange herstellt, sondern noch zusätzlich über eine an der zweiten Platte angeschweißten Mutter 43 und zusätzlich über ein Außengewinde, z.B. M16, am unteren Fußpunkt des Montagebolzen, über eine Kontermutter 45, angezogen wird. Diese Ausführung kommt dann zum Einsatz, wenn sehr hohe Querkräfte durch die Befestigungseinrichtung aufgenommen werden müssen. In Fig. 4b deutlich zu sehen, ist die zusätzliche Mutter 45 die auf der zweiten Platte 60 aufliegt. Der Bolzen und die Kontermutter 43 stellen eine maximale Querkraftaufnahme am Fußpunkt von zweiter Platte 60 zu Verfügung. Der Montagebolzen 44 ragt in der Regel 190 mm über die zweite Platte 60 hinaus und weist am oberen Ende ein Außengewinde 90 zur Befestigung, beispielsweise von Solarpanels und/oder Sekuranten auf.

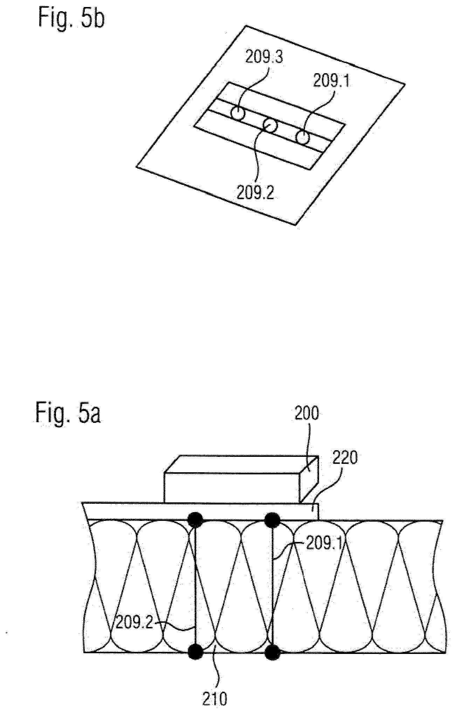

In Figur 5a - 5b ist eine Befestigungsvorrichtung zum Befestigen einer Schiene bspw. einer Solareinrichtung gemäß dem Stand der Technik gezeigt. Hierbei ist Fig. 5a ein Schnitt, Fig. 5b eine Draufsicht. Wie Fig. 5a zeigt, war bei der Befestigungseinrichtung gemäß dem Stand der Technik eine Schiene 200 nur mit Selbstbohrschrauben 209.1, 209.2, die durch die Isolationsschicht 212 bis auf das Dachelement 210, bspw. ein Blech, hinunterreichen, befestigt. Die das Blech 210 eingreifenden Selbstbohrschrauben 209.1, 209.2 hatten lediglich eine geringe Aufnahme von Auszugs- und Druckkräften von 125 kg, so dass derart befestigte Schienen 200 sehr leicht vom Dach abgehoben werden konnten. Die Abdichtung zur Isolationsschicht erfolgte mittels einer 2K Flüssigkeitskunststofffolie 220. Die 2K Flüssigkunststofffolie ist die Dachhaut, die die Abdichtung zur Verfügung stellt. Eine derartige Abdichtung entspricht nicht der Norm 18531 bzw. der Flachdachrichtlinie. Die Verklebung, die Abdichtung mit Flüssigfolie bzw. Kunststoff muss vorab von jedem einzelnen Hersteller von Dachfolien freigegeben werden. Im Zuge von Gewährleistung der Dachfolien, -abdichtungen wird die Freigabe nur auf Systemmaterial der einzelnen Hersteller verwiesen. Für diese Systemmaterialen (Flüssigfolie, -Kunststoff) liegt jedoch kein Prüfverfahren für die Verklebung von Solarbefestigungen vor. Somit liegt für den freigegebenen Werkstoff der Herstellers des Flüssigfolie-Kunststoffes zwar eine Freigabe vor, aber kein Zertifikat der Material-Prüfanstalt Braunschweig zur Verklebung von Solarbefestigungen, -schienen . Der Statik-Nachweis kann nicht erbracht werden. Ohne Freigabe der jeweiligen Hersteller von Dachfolien, Dachabdichtungen für den geprüften und zertifizierten Werkstoff (Flüssigfolie, -Kunststoff) ist der Einsatz zur Befestigung als zugelassenes Gesamtsystem nicht möglich. Aufgrund der nur geringen Auszugskraft ist eine Vielzahl von Befestigungspunkten gegenüber der erfindungsgemäßen, mechanisch Befestigungsvorrichtung notwendig.

In Fig. 5b ist in einer Draufsicht eine Schiene zur Befestigung einer Solaranlage gezeigt. Insgesamt weist die Schiene drei Befestigungspunkte für drei Schrauben 209.1, 209.2, 209.3, auf.

In Figur 6 ist eine erfindungsgemäße Befestigung mit Dichtungsmanschette gezeigt, wie in den Figuren 3 und 4a.

In Figur 6 dargestellt ist auch die Dachhaut 61, die auf die Isolationsschicht bzw. Dachisolierung 12 aufgebracht ist. Die Dachhaut 61 ist gleichzusetzen mit der in Fig. 2 gezeigten Dachabdichtung 14. Die Dachhaut kann beispielsweise PVC, Bitumen oder ein anderweitig wasserabweisendes Material sein. Wie Figur 6 zu entnehmen ist, wird um den Montagebolzen, der die Gewindestange 3 , eine Dichtungsmanschette 70 angeordnet und mit einer Rohr- bzw. Schlauchklemme 72 an der Dichtungsmanschette 70 gegen Eindringen von Regenwasser normgerecht mindestens 150 mm über der wasserführenden Dachhaut abgedichtet. Mit Hilfe der Dichtmanschette 70 wird eine sichere Abdichtung im Bereich 74 von Dachhaut und Dachabdichtung zum Bestand normgerecht hergestellt. Um die Dichtheit zu gewährleisten ist vorgesehen, dass die Dichtmanschette mit der bestehenden Dachhaut und/oder Dachabdichtung durch Schweißen oder Kleben verbunden wird. Jeder einzelne Hersteller von Dachfolien, Dachabdichtungen bietet für sein Produkt eine eigene Dichtungsmanschette für sein System an. Gleiche Bauteile wie in den Figuren 3, 4 und 4a sind mit denselben Bezugsziffern gekennzeichnet.

Mit der beschriebenen erfindungsgemäßen Befestigung wird eine feste Verbindung zum Tragwerk der Decke für eine Befestigungseinrichtung für Aufbauten wie beispielsweise Solarpanels oder auch eine Dachsicherung, zur Verfügung gestellt. Die erfindungsgemäße Befestigungseinrichtung und das erfindungsgemäße Verfahren zum Anbringen der Befestigungseinrichtung beispielsweise auf einem Dach zeichnen sich dadurch aus, dass eine feste Verbindung vom Dach zu der Befestigungseinrichtung zur Verfügung gestellt wird, so dass ein Verrutschen, insbesondere Raupeneffekt oder Abheben von Solarpanels, wie es beispielsweise bei einer Beschwerung mit Steinen auftritt, vermieden wird. Des Weiteren werden höhere Auszugskräfte als im Stand der Technik zur Verfügung gestellt.

Des Weiteren wird sichergestellt, dass zum einem mit der erfindungsgemäßen Befestigungseinrichtung sowie dem erfindungsgemäßen Verfahren zum Montieren der Befestigungseinrichtung für Aufbauten auf einem Dach eine dauerhafte, herstellerkonforme Dichtheit wieder hergestellt wird und auch die Dachisolierung durch die Befestigungseinrichtung nicht beschädigt wird. Mit dem erfindungsgemäßen Verfahren und der erfindungsgemäßen Befestigungseinrichtung wird die Dachlast und der Arbeitsaufwand erheblich reduziert. Des Weiteren wird eine Dachdurchdringungsabdichtung zur Verfügung gestellt, die den gültigen Normen DIN 18531 und allgemein gültigen Flachdachregeln entspricht. Die mechanische, erfindungsgemäße Befestigungsvorrichtung ist statisch nachweisbar und prüffähig. Durch den Einsatz von Systemkomponenten (Dichtungsmanschetten) der jeweiligen Hersteller von Dachfolien, Dachabdichtungen ist die Gewährleistung der Dachdurchdringung im System und gemäß der DIN 18531 sowie der "Flachdachrichtlinie" gegeben. Die erfindungsgemäße Befestigungsvorrichtung für Solaranlagen, sonstige Dachaufbauten (wie Wärmepumpen und Klimageräte) und Absturzsicherung lässt sich für jeden einzelnen Anwendungsfall statisch nachweisen und norm- und herstellergerecht ausführen.

## Patentansprüche

1. Befestigungseinrichtung für Aufbauten, insbesondere Solarpanels und/oder Elemente von Solaranlagen und/oder Absturzsicherungen, sonstige Aufbauten, wie Wärmepumpen, Klimageräten etc. auf Dächern, insbesondere Flachdächern, wobei die Befestigungseinrichtung bevorzugt eine feste Verbindung der Aufbauten mit dem Dach zur Verfügung stellt
mit
- wenigstens einer Gewindestange (3) und
- wenigstens einem an der Gewindestange (3) angeordnetes Befestigungselement, bevorzugt Dübel (5), insbesondere einem Kippdübel bevorzugt mit Einstellmutter oder sonstiger Einstellvorrichtung für die erforderliche Länge,
**dadurch gekennzeichnet, dass**
die Befestigungseinrichtung eine Stützhülse (1) umfasst, die die Gewindestange (3) umschließt.

2. Befestigungseinrichtung nach Anspruch 1,
**dadurch gekennzeichnet, dass**
die Stützhülse (1) eine Höhe H und/oder einen Durchmesser D aufweist, wobei die Höhe H der Hülse bevorzugt mit einer Höhe H_{Isolation} einer auf dem Dach angeordneten Isolationsschicht (12) übereinstimmt.

3. Befestigungseinrichtung nach einem der Ansprüche 1 bis 2,
**dadurch gekennzeichnet, dass**
die Befestigungseinrichtung eine erste Platte (30), insbesondere eine Stahlplatte umfasst, die bevorzugt mit der Gewindestange (3) fest verbunden ist und auf der die Stützhülse (1) insbesondere aufliegt.

4. Befestigungseinrichtung nach einem der Ansprüche 1 bis 3,
**dadurch gekennzeichnet, dass**
eine zweite Platte (60), insbesondere eine zweite Stahlplatte, vorgesehen ist, die mit einem Montagebolzen (44) fest verbunden ist, welche über die Gewindestange mit dem Montagebolzen eine form- und kraftschlüssige Verbindung der Gesamtkonstruktion herstellt.

5. Befestigungseinrichtung nach einem der Ansprüche 1 bis 4,
**dadurch gekennzeichnet, dass**
die Befestigungseinrichtung eine Dichtungsmanschette (70) umfasst, die den Gewindebolzen (44) umschließt und eine Abdichtung zum Bestand darstellt.

6. Befestigungseinrichtung nach einem der Ansprüche 1 bis 5,
**dadurch gekennzeichnet, dass**
der Durchmesser D der Stützhülse (1), im Bereich 50 mm bis 200 mm, insbesondere 80 mm - 150 mm, insbesondere 100 mm - 120 mm, beträgt.

7. Befestigungsvorrichtung nach einem der Ansprüche 1 bis 6,
**dadurch gekennzeichnet, dass**
die Höhe H der Stützhülse 50 mm bis 200 mm, bevorzugt 80 mm bis 180 mm, insbesondere 100 mm bis 160 mm, insbesondere 140 mm beträgt.

8. Verfahren zur Montage einer Befestigungseinrichtung für Aufbauten, insbesondere Solarpanels und/oder Elemente von Solaranlagen und/oder Absturzsicherungen, sonstige Aufbauten, wie Wärmepumpen, Klimageräten etc. auf Dächern, insbesondere Flachdächern, mit einer Isolationsschicht (12), wobei das Flachdach eine Decke (10) aufweist und das Verfahren folgende Schritte umfasst:
- es wird eine Öffnung, bevorzugt eine kreisrunde Öffnung, in die Isolations- bzw. Dämmschicht (12) eingebracht
- es wird eine erste Platte (30) durch die Öffnung auf die Decke (10) des Flachdaches aufgebracht
- es wird ein länglicher Körper, insbesondere eine Gewindestange (3), durch eine Plattenöffnung der ersten Platte (30), bevorzugt mit einem Dübel, insbesondere einem Kippdübel (15), hindurchgeführt
- der längliche Körper, insbesondere die Gewindestange (3), wird mit einem Befestigungsmittel, bevorzugt einer Mutter (42), fest mit der ersten Platte (30) verbunden
- eine Stützhülse (1), die den länglichen Körper, insbesondere die Gewindestange, umgibt, wird in die Öffnung der Isolations- bzw. Dämmschicht (12) eingesetzt

9. Verfahren nach Anspruch 8,
**dadurch gekennzeichnet, dass**
zwischen Stützhülse (1) und dem in die Stützhülse eingebrachten länglichen Körper, insbesondere der Gewindestange (3), ein Isolationsmaterial (12) eingebracht wird.

10. Verfahren nach einem der Ansprüche 8 bis 9,
**dadurch gekennzeichnet, dass**
auf die Stützhülse (1) eine zweite Platte (60) aufgesetzt wird, durch die das Isolationsmaterial (12) abgedeckt wird.

11. Verfahren nach einem der Ansprüche 8 bis 10,
**dadurch gekennzeichnet, dass**
auf die zweite Platte (60) ein Montagebolzen (44) aufgeschraubt wird und eine Dichtungsmanschette (70) über dem Gewindebolzen gebracht wird, bevorzugt derart, dass eine Abdichtung zur Dachhaut (12) ausgebildet wird.

12. Solaranlage mit wenigstens einem Solarpanel
**dadurch gekennzeichnet, dass**
die Solarpanels mit wenigstens einer Befestigungseinrichtung gemäß einem der Ansprüche 1 bis 7 verbunden sind.

13. Solaranlage gemäß Anspruch 12,
**dadurch gekennzeichnet, dass**
zwischen Solarpanel und Befestigungseinrichtung eine Schiene vorgesehen ist.

14. Solaranlage gemäß einem der Ansprüche 12 bis 13,
**dadurch gekennzeichnet, dass**
eine Dichtungsmanschette um den Montagebolzen (44), der die Gewindestange umfasst, angeordnet ist.

15. Solaranlage gemäß Anspruch 14,
**dadurch gekennzeichnet, dass**
die Dichtmanschette (70) mindestens 150 mm über einer wasserführenden Dachhaut angeordnet ist und/oder
die Dichtmanschette mit einer Dachhaut und/oder Dachabdichtung durch Schweißen und/oder Kleben verbunden ist.
